# EUROPEAN PATENT APPLICATION

(11) **EP 3 975 323 A1**
(43) Date of publication of application: **30.03.2022**
(21) Application number: 20827993.5
(22) Date of filing: 24.04.2020
(51) Int. Cl.: H01M 50/10, H01M 10/04

(54) **SECONDARY BATTERY, DEVICE, AND MANUFACTURING METHOD FOR SECONDARY BATTERY**

(30) Priority: 26.06.2019 CN 201920975727 U
(71) Applicant: Contemporary Amperex Technology Co., Limited, Fujian PRC 352100 (CN)
(72) Inventor: ZHANG, Min, Ningde, Fujian 352100 (CN); CHEN, Xiao, Ningde, Fujian 352100 (CN); NIU, Shaojun, Ningde, Fujian 352100 (CN)
(74) Representative: Pfenning, Meinig & Partner mbB
(86) International application number: PCT/CN2020/086843
(87) International publication number: WO 2020/259048

(57) **Abstract**

The present invention provides a secondary battery, an apparatus and a manufacturing method for a secondary battery, and the secondary battery includes an electrode assembly, a packaging bag and an electrode lead. The packaging bag has a main body portion and a sealing portion, the electrode assembly is housed in the main body portion, and the electrode lead is connected to the electrode assembly and passes through the sealing portion. The sealing portion includes a top sealing region and a side sealing region, the top sealing region is located on an outer side of the main body portion in a longitudinal direction, and the side sealing region is located on an outer side of the main body portion in a transverse direction. The top sealing region includes a first top sealing region and a second top sealing region, the electrode lead passes through the first top sealing region, the second top sealing region extends from the first top sealing region and is connected to the side sealing region, and the second top sealing region is inclined toward a side close to the electrode assembly. The side sealing region has a first crease line extending in the longitudinal direction, and the side sealing region is bent along the first crease line. The top sealing region has a second crease line extending in the transverse direction, and the top sealing region is bent along the second crease line. An extension line of the first crease line intersects an extension line of the second crease line, and an intersection point is located on one side of the second top sealing region away from the electrode assembly.

## Description

The present application claims priority to Chinese Patent Application No. 201920975727.X, filed to the Chinese Patent Office on June 26, 2019 and entitled "SECONDARY BATTERY", the entire content of which is incorporated herein by reference.

### TECHNICAL FIELD

The present invention relates to the field of batteries, and in particular, to a secondary battery, an apparatus and a manufacturing method for a secondary battery.

### BACKGROUND

With the rapid development of portable electronic devices, requirements for battery energy density are getting higher and higher. In a secondary battery, a packaging bag made of an aluminum plastic film or a steel plastic film may be used to replace a metal housing to reduce weight of the battery and increase energy density.

An electrode assembly of the secondary battery is housed in the packaging bag, and edges of the packaging bag may be connected in a sealing manner by thermal compression to form a sealing portion. However, the sealing portion occupies larger space, which affects the energy density of the secondary battery.

### SUMMARY

In view of the problem in the background, an objective of the present invention is to provide a secondary battery, an apparatus and a manufacturing method for a secondary battery, and the secondary battery can increase energy density and ensure sealing performance.

To achieve the foregoing objective, the present invention provides a secondary battery including an electrode assembly, a packaging bag and an electrode lead. The packaging bag has a main body portion and a sealing portion connected to the main body portion, the electrode assembly is housed in the main body portion, and the electrode lead is connected to the electrode assembly and passes through the sealing portion. The sealing portion includes a top sealing region and a side sealing region, the top sealing region is located on an outer side of the main body portion in a longitudinal direction, and the side sealing region is located on an outer side of the main body portion in a transverse direction. The top sealing region includes a first top sealing region and a second top sealing region, the electrode lead passes through the first top sealing region, the second top sealing region extends from one end of the first top sealing region closes to the side sealing region and is connected to the side sealing region, and the second top sealing region is inclined toward a side close to the electrode assembly relative to the first top sealing region. The side sealing region has a first crease line extending in the longitudinal direction, and the side sealing region is bent toward the main body portion along the first crease line. The top sealing region has a second crease line extending in the transverse direction, and the top sealing region and the electrode lead are bent along the second crease line. An extension line of the first crease line intersects an extension line of the second crease line, and an intersection point of the two is located on one side of the second top sealing region away from the electrode assembly.

According to the secondary battery as described above, one end of the first top sealing region close to the electrode assembly has a first edge, and one end of the first top sealing region away from the electrode assembly has a second edge. The second crease line is at least partially located between the first edge and the second edge.

According to the secondary battery as described above, one end of the second top sealing region away from the electrode assembly has a third edge. The first crease line runs through the side sealing region in the longitudinal direction, and the first crease line intersects the third edge to form a first intersection point. The second crease line runs through the first top sealing region, and the second crease line intersects the third edge to form a second intersection point. A distance between the first intersection point and the second intersection point is greater than 1 mm.

According to the secondary battery as described above, one end of the second top sealing region close to the electrode assembly has a fourth edge, and the third edge and the fourth edge are parallel to each other.

According to the secondary battery as described above, an included angle between the first edge and the fourth edge is 100°-170°.

According to the secondary battery as described above, a width of the second top sealing region is less than or equal to a width of the first top sealing region and a width of the side sealing region.

According to the secondary battery as described above, the side sealing region includes a first area and a second area, the first area extends from the main body portion and is bent along the first crease line, and the second area extends from an end part of the first area away from the main body portion and is folded back between the first area and the main body portion.

According to the secondary battery as described above, in the transverse direction, a surface of the second area close to the electrode assembly is bonded to the main body portion, and a surface of the second area away from the electrode assembly is bonded to the first area.

According to the secondary battery as described above, in the longitudinal direction, a size of the second area is smaller than a size of the first area.

According to the secondary battery as described above, the secondary battery further includes an insulating member, and the insulating member surrounds an outer side of the electrode lead and isolates the first top sealing region from the electrode lead. In the transverse direction, the second top sealing region is located on an outer side of the insulating member.

The present invention provides an apparatus including the secondary battery as described above.

The present invention further provides a manufacturing method for a secondary battery including:
providing a battery assembly and an electrode lead, and assembling the battery assembly and the electrode lead together;
providing a packaging bag having two packaging films arranged up and down in a thickness direction, and placing the battery assembly and the electrode lead assembled together between the two packaging films;
welding edges of the two packaging films, and cutting off four corners of the packaging bag along a trimming line, where the packaging bag has a main body portion and a sealing portion connected to the main body portion, an electrode assembly is housed in the main body portion, and the electrode lead is connected to the electrode assembly and passes through the sealing portion; the sealing portion includes a top sealing region and a side sealing region, the top sealing region is located on an outer side of the main body portion in a longitudinal direction, and the side sealing region is located on an outer side of the main body portion in a transverse direction; and the top sealing region includes a first top sealing region and a second top sealing region, the electrode lead passes through the first top sealing region, the second top sealing region extends from one end of the first top sealing region closes to the side sealing region and is connected to the side sealing region, and the second top sealing region is inclined toward a side close to the electrode assembly relative to the first top sealing region;
providing a first crease line extending in the longitudinal direction, and bending the side sealing region along the first crease line; and
providing a second crease line extending in the transverse direction, and bending the top sealing region and the electrode lead along the second crease line, where an extension line of the first crease line intersects an extension line of the second crease line, and an intersection point of the two is located on one side of the second top sealing region away from the electrode assembly. The beneficial effects of the present invention are as follows: according to the present application, by bending a top sealing region and a side sealing region, space occupied by a secondary battery is reduced, and energy density of the secondary battery is increased. Meanwhile, by obliquely disposing a second top sealing region, interference between the top sealing region and the side sealing region is avoided in a bending process, and sealing performance of a packaging bag is ensured.

### BRIEF DESCRIPTION OF DRAWINGS

FIG. 1 is a schematic diagram of a secondary battery according to the present invention;
FIG. 2 is a sectional view of FIG. 1 taken along a line A-A;
FIG. 3 is a sectional view of FIG. 1 taken along a line B-B;
FIG. 4 is an enlarged view of FIG. 1 in a circle;
FIG. 5 is a schematic diagram of a packaging film of a packaging bag of FIG. 3;
FIG. 6 is a sectional view of the packaging film of FIG. 5;
FIG. 7 to FIG. 9 are different schematic diagrams of a secondary battery according to the present invention in a molding process.

Reference signs are explained as follows:

| | | | |
|---|---|---|---|
| 1: | electrode assembly; | L1: | first crease line; |
| 2: | packaging bag; | L2: | second crease line; |
| 21: | main body portion; | L3: | third crease line; |
| 22: | sealing portion; | L4: | trimming line; |
| 221: | top sealing region; | E1: | first edge; |
| 221a: | first top sealing region; | E2: | second edge; |
| 221b: | second top sealing region; | E3: | third edge; |
| 222: | side sealing region; | E4: | fourth edge; |
| 222a: | first area; | G: | notch; |
| 222b: | second area; | X: | longitudinal direction; |
| 23: | packaging film; | Y: | transverse direction; |
| 231: | protective layer; | Z: | thickness direction; |
| 232: | metal layer; | | |
| 233: | connecting layer; | | |

| | | | |
|---|---|---|---|
| 3: | electrode lead; and | | |
| 4: | insulating member. | | |

### DESCRIPTION OF EMBODIMENTS

To make the objectives, technical solutions, and advantages of the present application clearer and more comprehensible, the present application will be further described below in detail with reference to the accompanying drawings and embodiments. It should be understood that the specific embodiments described herein are merely used to explain the present application, but are not intended to limit the present application.

In the description of the present application, unless otherwise specified and limited explicitly, the terms "first", "second", "third" and "fourth" are merely intended for a purpose of description, and shall not be understood as an indication or implication of relative importance. The term "a plurality of' refers to more than two (including two). Unless otherwise specified or illustrated, the term "connection" should be understood broadly, for example, the "connection" may either be a fixed connection, or a detachable connection, or an integrated connection, or an electrical connection, or a signal connection; and the "connection" may either be a direct connection, or an indirect connection through an intermediary. Those of ordinary skill in the art may appreciate the specific meanings of the foregoing terms in the present application according to specific conditions.

In the description of the specification, it should be understood that the terms representing directions such as "up" and "down" described in the embodiments of the present application are described from the angles shown in the accompanying drawings, and should not be understood as limitation on the embodiments of the present application. The present application will be further described below in detail through the specific embodiments with reference to the accompanying drawings.

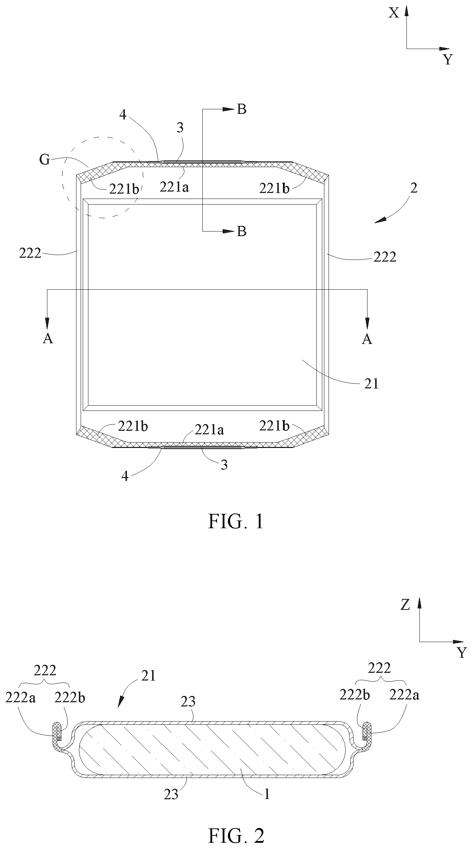

With reference to FIG. 1 to FIG. 3, a secondary battery of the present application includes an electrode assembly 1, a packaging bag 2, an electrode lead 3 and an insulating member 4.

The electrode assembly 1 is a core member of the secondary battery for achieving charging and discharging functions. The electrode assembly 1 includes a positive electrode sheet, a negative electrode sheet and a diaphragm, and the diaphragm isolates the positive electrode sheet from the negative electrode sheet. The positive electrode sheet includes a positive electrode current collector and a positive active material layer coated on a surface of the positive electrode current collector, the positive electrode current collector may be aluminum foil, and the positive active material layer includes a ternary material, lithium manganate oxide or lithium iron phosphate. The negative electrode sheet includes a negative electrode current collector and a negative active material layer coated on a surface of the negative electrode current collector, the negative electrode current collector may be copper foil, and the negative active material layer includes graphite or silicon.

The electrode assembly 1 may be in a winding structure. Specifically, there is one positive electrode sheet and one negative electrode sheet, and the positive electrode sheet and the negative electrode sheet are in banded structures. The positive electrode sheet, the diaphragm and the negative electrode sheet are stacked in sequence and wound more than two turns to form the electrode assembly 1. When the electrode assembly 1 is produced, the electrode assembly 1 may be wound into a hollow cylindrical structure first, and then flattened into a flat shape after the winding.

Alternatively, the electrode assembly 1 may also be in a laminated structure. Specifically, the positive electrode sheet is set in plurality, the negative electrode sheet is set in plurality, the plurality of positive electrode sheets and the plurality of negative electrode sheets are stacked alternately in a thickness direction Z, and the diaphragm isolates the positive electrode sheet from the negative electrode sheet.

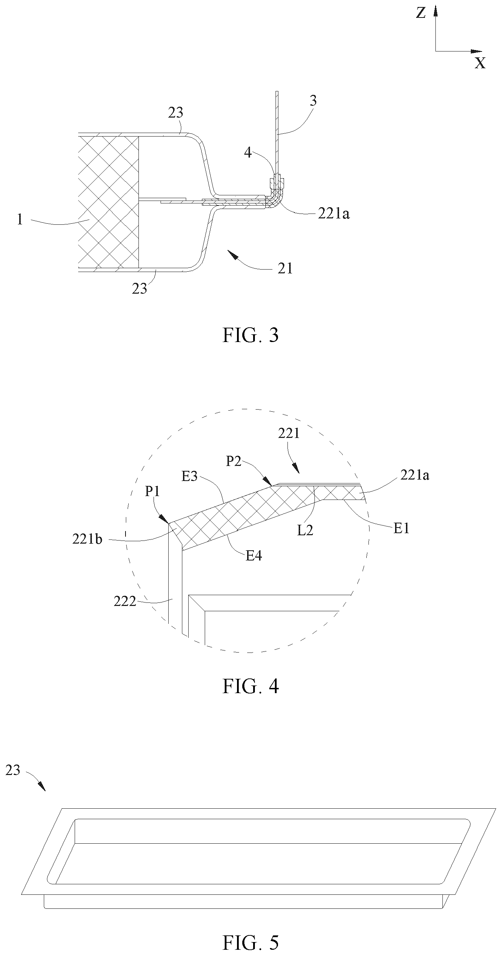

The packaging bag 2 includes two packaging films 23, and the two packaging films 23 are arranged up and down in the thickness direction Z. With reference to FIG. 5, at least one packaging film 23 is stamped to form a concave chamber, and the electrode assembly 1 is located between the two packaging films 23 and housed in the concave chamber.

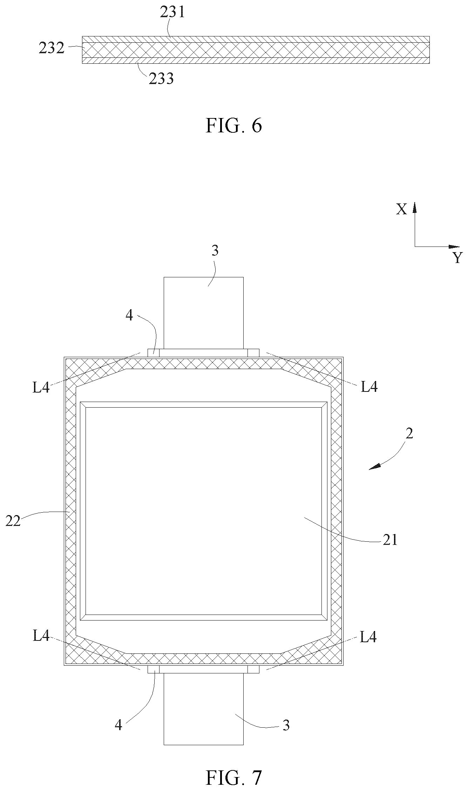

With reference to FIG. 6, each packaging film 23 includes a protective layer 231, a metal layer 232 and a connecting layer 233, and the protective layer 231 and the connecting layer 233 are respectively disposed on two sides of the metal layer 232. Specifically, the protective layer 231 may be fixed to a surface of the metal layer 232 away from the electrode assembly 1 through a binder, and the connecting layer 233 may be fixed to a surface of the metal layer 232 close to the electrode assembly 1 through the binder.

A material of the protective layer 231 may be nylon or polyethylene glycol terephthalate, a material of the metal layer 232 may be aluminum foil or steel foil, and a material of the connecting layer 233 may be polypropylene.

By thermal compression, connecting layers 233 of the two packaging films 23 are directly or indirectly connected together, thereby forming a sealed packaging bag 2. In terms of appearance, the packaging bag 2 has a main body portion 21 and a sealing portion 22 connected to the main body portion 21, and the electrode assembly 1 is housed in the main body portion 21. In the main body portion 21, the two packaging films 23 are in a separated state and enclose space for housing the electrode assembly 1. In the sealing portion 22, the connecting layers 233 of the two packaging films 23 are welded into one body. In the thermal compression process, the connecting layers 233 are melted and compressed. Therefore, after the molding by the thermal compression, a thickness of the sealing portion 22 is less than a sum of thicknesses of the two packaging films 23 before the thermal compression.

With reference to FIG. 3, the electrode lead 3 is connected to the electrode assembly 1, passes through the sealing portion 22 and extends to an outside of the packaging bag 2. Specifically, there may be two electrode leads 3, one electrode lead 3 is connected to the positive electrode current collector of the positive electrode sheet, and the other electrode lead 3 is connected to the negative electrode current collector of the negative electrode sheet. The two electrode leads 3 connect the electrode assembly 1 and other members outside the packaging bag 2, and then charging and discharging of the electrode assembly 1 are achieved. A material of the electrode lead 3 may be aluminum, nickel or copper plated with nickel.

The electrode lead 3 passes between the two packaging films 23. Since the connecting layer 233 is thin, the electrode lead 3 is easily in contact with the metal layer 232, causing safety risks. Therefore, the secondary battery of the present application is preferably provided with an insulating member 4.

There may be two insulating members 4. The two insulating members 4 respectively isolate the two electrode leads 3 from the sealing portion 22. Each insulating member 4 surrounds an outer side of a corresponding electrode lead 3. Apart of the insulating member 4 is clamped between the two packaging films 23, thereby isolating the electrode lead 3 from the packaging films 23 and reducing a risk of contact of the electrode lead 3 with the metal layer 232. A material of the insulating member 4 may be polypropylene.

Since a part of the insulating member 4 is clamped between the two packaging films 23, when thermal compression is performed on the two packaging films 23, the connecting layers 233 of the two packaging films 23 are welded to the insulating member 4.

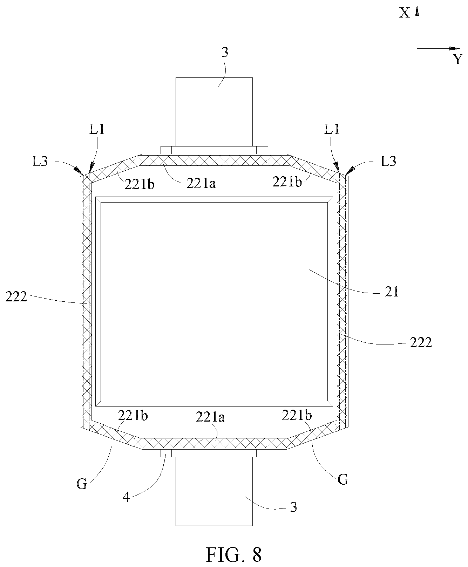

With reference to FIG. 1 and FIG. 8, the sealing portion 22 includes a top sealing region 221 and a side sealing region 222, the top sealing region 221 is located on an outer side of the main body portion 21 in a longitudinal direction X, and the side sealing region 222 is located on an outer side of the main body portion 21 in a transverse direction Y

In an embodiment, two electrode leads 3 may respectively extend from two ends of the packaging bag 2 in the longitudinal direction X. In this case, there may be two top sealing regions 221, the two top sealing regions 221 are respectively disposed on two sides of the main body portion 21 in the longitudinal direction X, and each electrode lead 3 respectively passes through a corresponding top sealing region 221. In an alternative embodiment, two electrode leads 3 may extend from the same end of the packaging bag 2 in the longitudinal direction X. In this case, there may be one top sealing region 221, the top seating region 221 is disposed on one side of the main body portion 21 in the longitudinal direction X, and the two electrode leads 3 both pass through the one top sealing region 221.

There may be two side sealing regions 222, and the two side sealing regions 222 are respectively located on outer sides of the main body portion 21 in the transverse direction Y. With reference to FIG. 8, in an embodiment, two top sealing regions 221 and two side sealing regions 222 are connected together to form an annular structure, and then sealing of the packaging bag 2 is achieved.

The top sealing region 221 includes a first top sealing region 221a and a second top sealing region 221b, the electrode lead 3 passes through the first top sealing region 221a, the second top sealing region 221b extends from one end of the first top sealing region 221a closes to the side sealing region 222 and is connected to the side sealing region 222, and the second top sealing region 221b is inclined toward a side close to the electrode assembly 1 relative to the first top sealing region 221a.

One end of the second top sealing region 221b is connected to the first top sealing region 221a, and the other end is connected to the side sealing region 222. When the second top sealing region 221b is disposed obliquely relative to the firs top sealing region 221a, spacing between the first top sealing region 221a and the side sealing region 222 in the longitudinal direction X can be increased.

With reference to FIG. 8, after the molding by the thermal compression, the sealing portion 22 has a certain width, which results in larger sizes of the secondary battery in the longitudinal direction X and the transverse direction Y, and affects energy density of the secondary battery. Therefore, optionally, with reference to FIG. 2 and FIG. 8, according to the present application, the side sealing portion 222 is bent preferably toward the main body portion 21 to reduce a size of the side sealing region 222 in the transverse direction Y After the molding by the bending, a first crease line L1 extending in the longitudinal direction X is formed on the side sealing region 222; that is, the side sealing region 222 is bent toward the main body portion 21 along the first crease line L1.

Similarly, according to the present application, the top sealing region 221 is further bent to reduce a size of the top sealing region 221 in the longitudinal direction X. After the molding by the bending, a second crease line L2 extending in the transverse direction Y is formed on the top sealing region 221; that is, the top sealing region 221 is bent along the second crease line L2. In addition, since the electrode lead 3 passes through the top sealing region 221, when the top sealing region 221 is bent along the second crease line L2, the electrode lead 3 is also bent along the second crease line L2.

According to the present application, by bending the top sealing region 221, a size occupied by the top sealing region 221 and the electrode lead 3 in the longitudinal direction X can be reduced. In addition, when a plurality of secondary batteries are connected into a group, the bent electrode lead 3 facilitates an electrical connection of adjacent batteries.

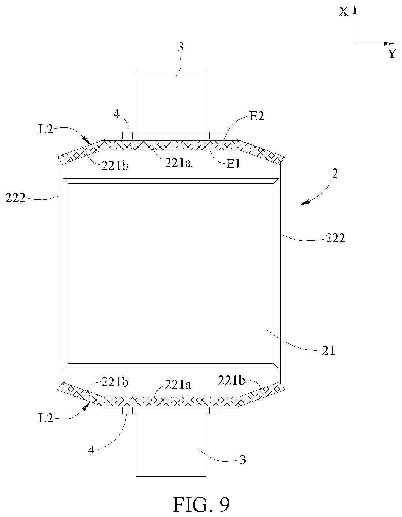

In the transverse direction Y, the second crease line L2 is located between first crease lines L1 of two side sealing regions 222, and a size of the second crease line L2 is smaller than spacing between the two first crease lines L1. With reference to FIG. 8 and FIG. 9, an extension line of the first crease line L1 intersects an extension line of the second crease line L2, and an intersection point of the two is located on one side of the second top sealing region 221b away from the electrode assembly 1. Further, the intersection point of the extension line of the first crease line L1 and the extension line of the second crease line L2 is located on the outside of the packaging bag 2.

If the first crease line L1 directly intersects the second crease line L2, when the side sealing region 222 and the top sealing region 221 are bent, the top sealing region 221 and the side sealing region 222 easily interfere with each other. Meanwhile, there is an overlap area between the top sealing region 221 and the side sealing region 222, and the overlap area is easily damaged in the bending process, which affects sealing performance of the packaging bag.

In the present application, by obliquely disposing the second top sealing region 221b, the size of the overall top sealing region 221 in the longitudinal direction X is increased, which provides more choices to the position of the second crease line L2. Meanwhile, by obliquely disposing the second top sealing region 221b, the size of the second crease line L2 in the transverse direction Y can also be reduced, which avoids direct intersection of the first crease line L1 and the second crease line L2.

In summary, according to the present application, by bending the top sealing region 221 and the side sealing region 222, space occupied by the secondary battery is reduced, and energy density of the secondary battery is increased. Meanwhile, by obliquely disposing the second top sealing region 221b, interference between the top sealing region 221 and the side sealing region 222 is avoided in the bending process, and sealing performance of the packaging bag 2 is ensured.

FIG. 7 to FIG. 9 are different schematic diagrams of a secondary battery according to the present invention in a molding process. Molding steps of the secondary battery of the present application will be described below in detail with reference to FIG. 7 to FIG. 9.
(i) Two packaging films 23 as described in FIG. 5 are produced by stamping, and then an electrode assembly 1 is placed between the two packaging films 23. It is added here that the electrode assembly 1, an electrode lead 3 and an insulating member 4 have been assembled together in advance.
(ii) By thermal compression, the two packaging films 23 are welded at edges to form a sealing portion 22. After the thermal compression, a secondary battery as shown in FIG. 7 is formed. It should be noted that a thermal compression device may use a specially-made shape so that the sealing portion 22 located near a corner of the packaging bag 2 has a variable width. Preferably, the sealing portion 22 located near the corner of the packaging bag 2 is trapezoidal.
(iii) With reference to FIG. 7, four corners of the packaging bag 2 are cut off along trimming lines L4 to form a secondary battery as shown in FIG. 8. The parts cut off are preferably triangular. After the trimming, an inclined second top sealing region 221b and a side sealing region 222 and a first top sealing region 221a connecting to the second top sealing region 221b are formed in the sealing portion 21, and an outer side of the second top sealing region 221b is a notch G left after the trimming.
(iv) With reference to FIG. 8, the side sealing region 222 is bent along a first crease line L1. By bending the side sealing region 222, space occupied by the side sealing region 222 in a transverse direction Y can be reduced, and energy density of the secondary battery is increased.
(v) With reference to FIG. 9, the top sealing region 221 is bent along a second crease line L2 to form a secondary battery as shown in FIG. 1. By bending the top sealing region 221, space occupied by the top sealing region 221 and the electrode lead 3 in a longitudinal direction X can be reduced, and the energy density of the secondary battery is increased.

According to the present application, the inclined second top sealing region 221b and the notch G corresponding to the second top sealing region 221b are produced by the thermal compression process in step (ii) and the trimming process in step (iii), and then interference between the top sealing region 221 and the side sealing region 222 is avoided in the bending process.

With reference to FIG. 9, one end of the first top sealing region 221a close to the electrode assembly 1 has a first edge E1, and one end of the first top sealing region 221a away from the electrode assembly 1 has a second edge E2. In a plane perpendicular to a thickness direction Z, a projection of the first edge E1 and a projection of the second edge E2 are approximately straight lines parallel to the transverse direction Y. The second crease line L2 is at least partially located between the first edge E1 and the second edge E2.

After the top sealing region 221 is bent, a part of the second crease line L2 is located in the first top sealing region 221a, and the other part of the second crease line L2 is located in the second top sealing region 221b. In other words, the first top sealing region 221a is bent into two parts along the second crease line L2, and the second top sealing region 221b is bent into two parts along the second crease line L2. In this case, according to the present application, it can be avoided that other parts of the packaging bag 2 are bent with the bending of the top sealing region 221.

With reference to FIG. 4, one end of the second top sealing region 221b away from the electrode assembly 1 has a third edge E3. An outer side of the third edge E3 is a notch G. With reference to FIG. 8, the first crease line L1 runs through the side sealing region 222 in the longitudinal direction X, that is, two ends of the first crease line L1 in the longitudinal direction X respectively intersect two edges of the side sealing region 222 in the longitudinal direction X. With reference to FIG. 9, the second crease line L2 runs through the first top sealing region 221a.

The first crease line L1 intersects the third edge E3 to form a first intersection point PI, the second crease line L2 intersects the third edge E3 to form a second intersection point P2, and a distance between the first intersection point P1 and the second intersection point P2 is greater than 1 mm. If the distance between the first intersection point P1 and the second intersection point P2 is too small, it will result in stress concentration at the third edge E3, and the second top sealing region 221b is easily damaged, which affects sealing performance of the packaging bag 2.

One end of the second top sealing region 221b close to the electrode assembly 1 has a fourth edge E4, and the third edge E3 and the fourth edge E4 are parallel to each other. The third edge E3 and the fourth edge E4 are arranged in parallel so that a width of the second top sealing region 221b is uniform, and uniformity of sealing strength of the second top sealing region 221b is improved.

With reference to FIG. 4, an included angle between the first edge E1 and the fourth edge E4 is α. When the position and the size of the first edge E1 are constant, the smaller a value of α is, and the closer the fourth edge E4 is to a main body portion 21 and the electrode assembly 1. If the fourth edge E4 is too close to the electrode assembly 1, the second top sealing region 221b with high hardness may damage the electrode assembly 1 when the battery vibrates. The greater the value of α is, the smaller a degree of inclination of the second top sealing region 221b is, the smaller spacing between the first crease line L1 and the second crease line L2 in the longitudinal direction X is, and the higher a risk of interference between the top sealing region 221 and the side sealing region 222 in bending is. Therefore, preferably, the included angle α between the first edge E1 and the fourth edge E4 is 100°-170°.

A width of the second top sealing region 221b is less than or equal to a width of the first top sealing region 221a and a width of the side sealing region 222. With reference to FIG. 8, the width of the second top sealing region 221b, the width of the first top sealing region 221a and the width of the side sealing region 222 all refer to their widths before the bending, or their widths in an unfolded state. The width of the second top sealing region 221b is its size in the longitudinal direction X, the width of the first top sealing region 221a is its size in the longitudinal direction X, and the width of the side sealing region 222 is its size in the transverse direction Y.

When the secondary battery is abnormal (for example, a short circuit), the electrode assembly 1 releases a large amount of gas, and the gas collects in the packaging bag 2 and causes an explosion risk. On the premise of satisfying sealing strength, the second top sealing region 221b may have a relatively small width. When the electrode assembly 1 releases a large amount of gas, the gas can break through the second top sealing region 221b, thereby releasing the gas to the outside of the packaging bag 2 in time, reducing the explosion risk, and improving safety performance.

With reference to FIG. 2 and FIG. 8, the side sealing region 222 includes a first area 222a and a second area 222b, the first area 222a extends from the main body portion 21 and is bent along the first crease line L1, and the second area 222b extends from an end part of the first area 222a away from the main body portion 21 and is folded back between the first area 222a and the main body portion 21. Specifically, in step (iv), the side sealing region 222 may be bent along a third crease line L3 first, the first area 222a and the second area 222b are on two sides of the third crease line L3, and then the first area 222a is bent along the first crease line L1.

A trimming process needs to be performed on the packaging film 22 in the molding process, and a metal layer 232 is exposed at a cut section. The exposed metal layer 232 is easily corroded and may cause a risk of a short circuit. According to the present application, by bending the side sealing region 222 twice, a part of the metal layer 232 may be clamped between the first area 222a and the main body portion 21, exposure of the metal layer 232 is reduced, and the risk of the short circuit is reduced.

With reference to FIG. 2, in the transverse direction Y, a surface of the second area 222b close to the electrode assembly 1 is bonded to the main body portion 21, and a surface of the second area 222b away from the electrode assembly 1 is bonded to the first area 222a. According to the present application, the side sealing region 222 is bonded to a surface of the main body portion 21 through an insulating adhesive, which avoids unfolding the side sealing region 222. In addition, the insulating adhesive may coat the exposed metal layer 232, which reduces corrosion of the metal layer 232.

In step (iii), the notch G formed by the trimming is preferably triangular. Therefore, with reference to FIG. 2 and FIG. 8, in the longitudinal direction X, a size of the second area 222b is smaller than a size of the first area 222a. Since the size of the first area 222a is larger than the size of the second area 222b, the first area 222a may completely cover the second area 222b from the outer side, thereby reducing the exposure of the metal layer 232.

The electrode lead 3 passes through the first top sealing region 2221a, and the insulating member 4 can isolate the first top sealing region 221a from the electrode lead 3. Preferably, in the transverse direction Y, the second top sealing region 221b is located on an outer side of the insulating member 4; that is, in the thickness direction Z, the insulating member 4 does not overlap the second top sealing region 221b. With reference to FIG. 7 and FIG. 8, according to the present application, the second top sealing region 221b is formed by trimming the packaging bag 2 along the trimming line L4. If the insulating member 4 overlaps the second top sealing region 221b in the thickness direction Z, a part of the insulating member 4 is cut off in trimming, which affects connection strength of the insulating member 4 and the packaging bag 2.

An embodiment of the present invention further provides an apparatus including the secondary battery in the foregoing embodiments, where the apparatus may be a vehicle or an energy storage device.

## Claims

1. A secondary battery, comprising an electrode assembly (1), a packaging bag (2) and an electrode lead (3);
wherein the packaging bag (2) has a main body portion (21) and a sealing portion (22) connected to the main body portion (21), the electrode assembly (1) is housed in the main body portion (21), and the electrode lead (3) is connected to the electrode assembly (1) and passes through the sealing portion (22);
the sealing portion (22) comprises a top sealing region (221) and a side sealing region (222), the top sealing region (221) is located on an outer side of the main body portion (21) in a longitudinal direction (X), and the side sealing region (222) is located on an outer side of the main body portion (21) in a transverse direction (Y);
the top sealing region (221) comprises a first top sealing region (221a) and a second top sealing region (221b), the electrode lead (3) passes through the first top sealing region (221a), the second top sealing region (221b) extends from one end of the first top sealing region (221a) closes to the side sealing region (222) and is connected to the side sealing region (222), and the second top sealing region (221b) is inclined toward a side close to the electrode assembly (1) relative to the first top sealing region (221a);
the side sealing region (222) has a first crease line (L1) extending in the longitudinal direction (X), and the side sealing region (222) is bent toward the main body portion (21) along the first crease line (L1); the top sealing region (221) has a second crease line (L2) extending in the transverse direction (Y), and the top sealing region (221) and the electrode lead (3) are bent along the second crease line (L2); and
an extension line of the first crease line (L1) intersects an extension line of the second crease line (L2), and an intersection point of the two is located on one side of the second top sealing region (221b) away from the electrode assembly (1).

2. The secondary battery according to claim 1, wherein
one end of the first top sealing region (221a) close to the electrode assembly (1) has a first edge (E1), and one end of the first top sealing region (221a) away from the electrode assembly (1) has a second edge (E2); and
the second crease line (L2) is at least partially located between the first edge (E1) and the second edge (E2).

3. The secondary battery according to claim 1 or 2, wherein
one end of the second top sealing region (221b) away from the electrode assembly (1) has a third edge (E3);
the first crease line (L1) runs through the side sealing region (222) in the longitudinal direction (X), and the first crease line (L1) intersects the third edge (E3) to form a first intersection point (PI);
the second crease line (L2) runs through the first top sealing region (221a), and the second crease line (L2) intersects the third edge (E3) to form a second intersection point (P2); and
a distance between the first intersection point (PI) and the second intersection point (P2) is greater than 1 mm.

4. The secondary battery according to claim 3, wherein one end of the second top sealing region (221b) close to the electrode assembly (1) has a fourth edge (E4), and the third edge (E3) and the fourth edge (E4) are parallel to each other.

5. The secondary battery according to claim 4, wherein an included angle between the first edge (E1) and the fourth edge (E4) is 100°-170°.

6. The secondary battery according to any one of claims 1 to 5, wherein a width of the second top sealing region (221b) is less than or equal to a width of the first top sealing region (221a) and a width of the side sealing region (222).

7. The secondary battery according to any one of claims 1 to 6, wherein
the side sealing region (222) comprises a first area (222a) and a second area (222b), the first area (222a) extends from the main body portion (21) and is bent along the first crease line (L1), and the second area (222b) extends from an end part of the first area (222a) away from the main body portion (21) and is folded back between the first area (222a) and the main body portion (21).

8. The secondary battery according to claim 7, wherein in the transverse direction (Y), a surface of the second area (222b) close to the electrode assembly (1) is bonded to the main body portion (21), and a surface of the second area (222b) away from the electrode assembly (1) is bonded to the first area (222a).

9. The secondary battery according to any one of claims 7 to 8, wherein in the longitudinal direction (X), a size of the second area (222b) is smaller than a size of the first area (222a).

10. The secondary battery according to any one of claims 1 to 9, wherein
the secondary battery further comprises an insulating member (4), and the insulating member (4) surrounds an outer side of the electrode lead (3) and isolates the first top sealing region (221a) from the electrode lead (3); and
in the transverse direction (Y), the second top sealing region (221b) is located on an outer side of the insulating member (4).

11. An apparatus, comprising the secondary battery according to any one of claims 1 to 10.

12. A manufacturing method for a secondary battery, comprising:
providing a battery assembly (1) and an electrode lead (3), and assembling the battery assembly (1) and the electrode lead (3) together;
providing a packaging bag (2) having two packaging films (23) arranged up and down in a thickness direction (Z), and placing the battery assembly (1) and the electrode lead (3) assembled together between the two packaging films (23);
welding edges of the two packaging films (23), and cutting off four corners of the packaging bag (2) along a trimming line (L4), wherein the packaging bag (2) has a main body portion (21) and a sealing portion (22) connected to the main body portion (21), an electrode assembly (1) is housed in the main body portion (21), and the electrode lead (3) is connected to the electrode assembly (1) and passes through the sealing portion (22); the sealing portion (22) comprises a top sealing region (221) and a side sealing region (222), the top sealing region (221) is located on an outer side of the main body portion (21) in a longitudinal direction (X), and the side sealing region (222) is located on an outer side of the main body portion (21) in a transverse direction (Y); and the top sealing region (221) comprises a first top sealing region (221a) and a second top sealing region (221b), the electrode lead (3) passes through the first top sealing region (221a), the second top sealing region (221b) extends from one end of the first top sealing region (221a) closes to the side sealing region (222) and is connected to the side sealing region (222), and the second top sealing region (221b) is inclined toward a side close to the electrode assembly (1) relative to the first top sealing region (221a);
providing a first crease line (L1) extending in the longitudinal direction (X), and bending the side sealing region (222) along the first crease line (L1); and
providing a second crease line (L2) extending in the transverse direction (Y), and bending the top sealing region (221) and the electrode lead (3) along the second crease line (L2), wherein an extension line of the first crease line (L1) intersects an extension line of the second crease line (L2), and an intersection point of the two is located on one side of the second top sealing region (221b) away from the electrode assembly (1).
